Europäisches Patentamt

European Patent Office

Office européen des brevets

(11) Numéro de publication: **0 518 098 B1**

# (12) FASCICULE DE BREVET EUROPEEN

(45) Date de publication de fascicule du brevet: **09.08.95**

(51) Int. Cl.⁶: **B60B 21/10**, B60C 15/02, B60C 15/05

(21) Numéro de dépôt: **92108600.5**

(22) Date de dépôt: **21.05.92**

(54) **Jante à fond plat pour pneumatique "poids lourd" sans chambre à air et ensemble d'une telle jante avec un pneumatique de rapport de forme inférieur à 0,80.**

(30) Priorité: **10.06.91 FR 9107114**

(43) Date de publication de la demande:
**16.12.92 Bulletin 92/51**

(45) Mention de la délivrance du brevet:
**09.08.95 Bulletin 95/32**

(84) Etats contractants désignés:
**AT BE CH DE DK ES FR GB GR IT LI LU NL SE**

(56) Documents cités:
**EP-A- 0 168 754
EP-A- 0 221 195
DE-A- 2 452 306
DE-A- 2 514 883
GB-A- 2 085 375**

(73) Titulaire: **COMPAGNIE GENERALE DES ETA-BLISSEMENTS MICHELIN - MICHELIN & CIE
12, Cours Sablon
F-63040 Clermont-Ferrand Cédex (FR)**

(72) Inventeur: **Durif, Pierre
5, chemin de Pedoux
F-63530 Enval (FR)**

(74) Mandataire: **Devaux, Edmond-Yves et al
Michelin & Cie
Service SRK. Brevets
23, Place des Carmes
F-63040 Clermont-Ferrand Cédex (FR)**

## Description

L'invention concerne une jante pour le montage et le roulage d'un pneumatique "tubeless", c'est à dire sans chambre à air, destiné à l'équipement de véhicules type Poids Lourd tels que les camions, les autobus, les "métropolitains". Elle concerne également un ensemble roulant formé d'une telle jante et d'un pneumatique "tubeless" possédant des bourrelets à structure spéciale.

Si nous considérons les jantes des ensembles roulants couramment utilisées, nous pouvons distinguer principalement des jantes dites à base creuse, possédant des sièges tronconiques inclinés par rapport à l'axe de rotation de l'ensemble d'un angle de 5° ou de 15°, et des jantes à fond plat ou pratiquement plat ayant des sièges inclinés soit à 0°, soit à 5° par rapport à l'axe de rotation.

Les jantes dites à base creuse comportent une gorge de montage dont le diamètre est nettement inférieur au diamètre nominal de la jante. Ce diamètre intérieur de la jante est considéré par les utilisateurs comme trop petit et il ne permet pas de choisir des tambours de freins de dimensions adaptées à un freinage efficace de véhicules de plus en plus puissants.

Il est hautement souhaitable d'augmenter le diamètre du fond de jante, et dans toute la mesure du possible sans augmenter le diamètre hors-tout de l'ensemble roulant, ce qui revient à utiliser une jante à fond plat, fond dont le diamètre est sensiblement égal au diamètre nominal de la jante.

Pour le montage du pneumatique "tubeless", une jante à fond plat nécessite la présence d'au moins un anneau latéral amovible, d'un anneau de verrouillage et d'un joint d'étanchéité, et évidemment du fond de jante muni d'un rebord fixe du côté opposé au côté où les pièces sont amovibles. Il faut donc au minimum trois pièces. Dans la majorité des cas, le nombre de pièces nécessaires est supérieur à trois et peut atteindre parfois six pièces pour les grosses dimensions "Poids lourds" ; exception faite des joints d'étanchéité, les pièces d'une jante sont métalliques, et sont donc encombrantes et lourdes. En outre, ces pièces métalliques sont souvent sujettes à des usures partielles, localisées, avec ou sans oxydation et formation de rouilles, avaries qui entraînent lors d'utilisations ultérieures des montages défectueux avec pertes de pression mais aussi création de concentration de contraintes pouvant entraîner des ruptures de pièces et des accidents. Par ailleurs, les joints d'étanchéité en caoutchouc vulcanisé demandent, comme connu, beaucoup de soins dans leur placement ; en outre ils sont sujets à l'oxydation naturelle, d'où des craquelures. Ainsi, dans de nombreux cas les conditions sont telles que ces joints ne remplissent pas de manière satisfaisante le rôle auquel ils étaient destinés.

Une jante connue, correspondante au préambule de la revendication 1, est montrée, par exemple, par GB-A-2 085 375.

Afin de remédier aux inconvénients cités, l'invention propose une jante composée d'un fond de jante métallique et de deux anneaux latéraux amovibles, formés chacun d'un siège et d'un rebord, caractérisée en ce que

- chaque anneau latéral, vu en section méridienne a une face radialement extérieure formée d'une génératrice tronconique de largeur axiale (L), de rayon ($R_S$) par rapport à l'axe de rotation de la jante, faisant avec ledit axe un angle ($\beta$) compris entre 0° et 15° et étant réunie à un rebord de hauteur (H) par l'intermédiaire d'un arc de cercle de rayon ($\rho_1$), et une face radialement intérieure formée d'une partie cylindrique de rayon ($R_e$), de largeur axiale ($L_1$) comprise entre $L + (H + h)/2$ et $L + (H + h)$, et axialement à l'extérieur d'une partie tronconique dont la génératrice fait avec l'axe de rotation un angle ($\alpha$) compris entre 10° et 35°, h étant l'épaisseur du siège tronconique de l'anneau, égale à ($R_S - R_e$),

- chaque anneau latéral étant composé d'un mélange de caoutchouc vulcanisé renforcé, entre le rebord et la face intérieure, par un élément de renforcement annulaire dont le développement circonférentiel peut s'allonger d'au moins 3 %, possédant une section transversale dont la dimension radiale maximale (D) est comprise entre les quantités (H + h) et H, la déformation de cette section sous effort de compression étant inférieure à 2 %,

- et en ce que le fond de jante métallique, présente une partie cylindrique de rayon ($R_F$) égal à $k\ R_e$, k étant compris entre 1,02 et 1,05, cette partie cylindrique étant prolongée axialement à l'extérieur par des parties tronconiques dont les génératrices font avec l'axe de rotation des angles ($\alpha_1$) compris dans l'intervalle $\alpha \pm 2°$, les rayons maximaux ($R_J$) de ces parties tronconiques étant tels que la quantité $[R_F + (H + h)] - R_J$ soit inférieure à la dimension (D).

Il faut entendre par dimension radiale maximale (D) de la section transversale de l'élément de renforcement anulaire la plus grande distance radiale entre deux points du contour de ladite section situés sur une perpendiculaire à l'axe de rotation de la jante.

De manière usuelle, la section transversale de l'élément de renforcement est circulaire. De manière préférentielle, cette section présente au moins des faces parallèles d'une part au contour du rebord de la face radialement extérieure dudit anneau latéral d'autre part à sa face radialement intérieure.

Il faut entendre par déformation de la section sous effort de compression, la déformation sous compression de la dimension radiale maximale (D).

Les formes du rebord de la face radialement extérieure de l'anneau latéral peuvent être diverses. Quelle que soit cette forme, elle intersecte la génératrice du siège tronconique en un point donné. Par ce point passent d'une part une droite perpendiculaire à l'axe de rotation, et d'autre part une droite parallèle audit axe. Ces deux droites sont les axes de référence pour la mesure des distances axiales et des distances radiales. Les tracés correspondant aux formes de rebord sont, vus en section méridienne, avantageusement situés radialement à l'extérieur et axialement à l'intérieur d'un segment de droite joignant le point d'intersection défini ci-dessus à un point du sommet du rebord situé à la distance $(H+h)/2$ de l'axe de référence horizontal. Aussi le rebord d'anneau peut être formé d'un arc de cercle de rayon ($\rho_2$), tangent au premier arc de cercle de rayon ($\rho_1$), et ($\rho_2$) étant égal à H. Il peut aussi être formé d'un segment de droite perpendiculaire ou non à l'axe de rotation, tangent à l'arc de cercle de rayon ($\rho_1$) et à un deuxième arc de cercle de rayon ($\rho_3$) de manière à obtenir la hauteur (H) désirée.

La face radialement extérieure de l'anneau latéral peut avoir un profil méridien identique au profil normalisé (normes TRA ou ETRTO internationales) des bords de jante.

La face radialement intérieure de l'anneau latéral élastique amovible est avantageusement munie d'une saillie présentant en section méridienne une forme triangulaire, l'épaisseur de cette saillie étant comprise entre 4 et 6 mm. Cette saillie a pour but, en combinaison avec l'encoche ou gorge correspondante de la face radialement extérieure du fond de jante, la mise en place correcte de l'anneau latéral. Aussi cette saillie peut être localisée axialement en tout point de la face radialement intérieure dudit anneau. En particulier, le côté axialement extérieur de la forme triangulaire peut être dans le prolongement de la partie tronconique de la face intérieure de l'anneau latéral, ce qui permet une augmentation de la dimension (D) du renfort annulaire de l'anneau. Quant à l'autre côté de la forme triangulaire, il réalise la jonction avec la face intérieure du siège tronconique.

Quant au fond de jante, outre la gorge de mise en place de l'anneau latéral, il comporte avantageusement un renfort central d'épaisseur sensiblement égale à $(R_J - R_F)$, ce qui améliore le guidage des bourrelets du pneumatique lors du montage et de la mise en pression, et permet le passage de la valve de gonflage.

L'élément de renforcement annulaire est avantageusement un ressort annulaire hélicoïdal à spires métalliques jointives. Une spire individuelle peut avoir une section transversale quelconque, mais elle est de préférence circulaire et le diamètre de la section transversale de la spire est, en fonction des dimensions du ressort, comprise entre 1 et 4 mm, ce qui permet une déformation de la spire, sous effort de compression, inférieure à 2 %. Il faut entendre par déformation sous compression de la spire, la déformation d'un diamètre (D) de la section transversale du ressort : le rétrécissement du diamètre ne doit pas être supérieur ou égal à 2 %.

La résistance à la compression de ce ressort peut être avantageusement améliorée par l'insertion à l'intérieur des spires, soit d'un anneau en caoutchouc vulcanisé de forte dureté, soit d'un anneau en matière plastique, ces anneaux étant circulairement discontinus pour conserver l'élasticité du ressort.

On entend par mélange de caoutchouc vulcanisé ou vulcanisat un mélange d'élastomère, de charges renforçantes, et d'additifs divers bien connus, que l'on vulcanise. Le module sécant d'élasticité à un allongement relatif de 10 % est au moins égal à 5,5 MPa.

Pour améliorer la résistance à la compression de l'anneau latéral suivant une direction parallèle à l'axe de rotation de la jante, et plus particulièrement du siège dudit anneau, il est avantageux de renforcer celui-ci par une nappe de renforcement de câbles radiaux, nappe qui est retournée autour de l'élément de renforcement annulaire pour former deux couches de renforcement dans le siège de l'anneau latéral.

Les jantes telles que définies ci-dessus présentent par ailleurs de grands avantages, en particulier lors de l'utilisation avec certains pneumatiques. En effet, s'il est souhaitable d'augmenter le diamètre de la jante sans augmenter le diamètre hors-tout de l'ensemble roulant, il est avantageux dans d'autres cas de diminuer le diamètre hors-tout du pneumatique sans diminuer le diamètre de la jante, cette conception d'ensemble roulant étant recommandée pour abaisser le centre de gravité des véhicules "Poids Lourds" et en particulier des remorques ou des semi-remorques.

Dans tous les cas sont donc souhaités des pneumatiques de type "Poids Lourd" dont le rapport de forme c'est-à-dire le rapport de la hauteur sur jante à la largeur axiale maximale serait inférieur à 0,80, ce rapport étant obtenu en conservant sensiblement la largeur axiale maximale normalisée actuellement.

La mise au point de tels pneumatiques est délicate. Pour des conditions nominales de charge et de pression connues pour une dimension donnée du pneumatique, abaisser la hauteur de ce pneumatique entraîne inévitablement en roulage des insuffisances notoires de l'endurance des bourrelets du pneumatique, insuffisances en particulier au niveau des extrémités des retournements de l'armature de carcasse, libres de tout mouvement.

Des méthodes simples de remédier à ces défauts ou avaries se produisant en extrémités de retournements d'armature de carcasse sont connues. Une première méthode consiste à supprimer les retournements, les extrémités d'armature de carcasse étant alors enserrées entre deux parties métalliques qui peuvent être des feuillards métalliques, des tringles métalliques, ou toutes autres pièces métalliques annulaires présentant dans leurs faces radialement extérieure et radialement intérieure respectivement des portions planes de largeur axiale suffisante et sensiblement concentriques entre elles. Une variante de cette méthode consiste à supprimer l'une des parties métalliques et à enserrer les extrémités de l'armature de carcasse entre une partie métallique et le siège métallique de la jante de service.

Une deuxième méthode consiste à conserver des retournements d'armature de carcasse autour de tringles, mais à enserrer ces retournements entre lesdites tringles et des tringles auxiliaires situées radialement au dessus desdites tringles principales.

De telles dispositions sont par exemple décrites dans les brevets FR 1 456 962 et FR 1 328 752.

Les pneumatiques ainsi décrits nécessitent pour leur montage des jantes à base creuse avec, lors du montage, une nécessaire ovalisation des bourrelets, ce qui conduit à des efforts considérables exercés sur lesdits bourrelets, et même dans certains cas à une impossibilité de montage.

Pour réaliser des pneumatiques "Poids Lourd" dont le rapport H/B est inférieur à 0,80, ne nécessitant pas un montage sur jante à base creuse, l'invention propose aussi un ensemble roulant composé d'une jante telle que décrite précédemment et d'un pneumatique dont les extrémités d'armature de carcasse ou dont l'armature de carcasse et/ou son retournement sont, dans les bourrelets enserrés entre les deux faces respectivement de deux éléments annulaires inextensibles circonférentiellement et parties intégrantes du pneumatique, lesdites faces étant planes et parallèles entre elles sur une distance axiale au moins égale à 15 mm, et inclinées par rapport à l'axe de rotation d'un angle ouvert vers l'extérieur du pneumatique, compris entre 5° et 30°, un des éléments recouvrant radialement le rebord de jante et une partie de son siège, les extrémités des éléments annulaires, les plus rapprochées radialement de l'axe de rotation de l'ensemble, l' étant d'une distance ($R_P$) au moins égale au rayon ($R_J$) de jante (1).

Il faut entendre par faces parallèles des faces dont les tracés dans un plan méridien font un angle de 0° ± 5°.

Les éléments annulaires peuvent être métalliques ou en matériau composite renforcé. Lorsqu'ils sont métalliques, ces éléments peuvent être des tringles, formées soit de feuillard ou ruban, de forme coudée ou non, soit de fils à section rectangulaire, de préférence en acier. De telles tringles ne peuvent avoir que des formes simples. De façon avantageuse, car plus économique et permettant toute forme possible, les éléments métalliques sont des viroles. Dans les deux cas, tringles ou viroles, un des éléments métalliques prend appui au moins sur le siège de l'anneau latéral élastique et le deuxième élément recouvre le premier et dans tous les cas le sommet du rebord de l'anneau latéral élastique. De manière préférentielle, l'élément métallique qui recouvre le siège de l'anneau latéral recouvre aussi le sommet du rebord.

Dans le cas d'une armature de carcasse avec retournement, celui-ci peut se faire autour de l'élément métallique prenant apui sur le siège de l'anneau latéral élastique, que ce soit de l'intérieur vers l'extérieur ou inversement, l'extrêmité du retournement étant alors enserrée entre les deux éléments métalliques, sans que l'armature de carcasse elle-même le soit. Le retournement de l'armature de carcasse peut avantageusement se faire autour d'une tringle annexe, renforçant une pointe de mélange de caoutchouc vulcanisé située entre ou axialement à l'intérieur des deux éléments métalliques.

Cette tringle annexe, de faible diamètre, néanmoins supérieur à la distance séparant axialement à l'intérieur les deux faces planes en regard des éléments métalliques, et de faible résistance permet en combinaison avec l'action de serrage des deux faces planes des éléments métalliques une meilleure reprise des efforts de tension de l'armature de carcasse.

Dans le cas de la solution préférentielle des viroles métalliques, la face radialement intérieure de la virole inférieure a un profil méridien identique à celui de la face radialement extérieure de l'anneau latéral élastique correspondant, permettant ainsi l'appui de la virole d'une part sur le siège et d'autre part sur le rebord dudit anneau.

Quant à la face radialement extérieure de cette virole inférieure, elle possède soit, une génératrice rectiligne inclinée d'un angle entre 5° et 30°, soit une génératrice formée de deux segments de doite dont l'un est incliné d'un angle compris entre 5° et 30°, et l'autre axialement à l'extérieur présente une inclinaison inférieure.

La face radialement intérieure de la virole supérieure présente soit une génératrice rectiligne, inclinée du même angle que la génératrice la plus inclinée de la face radialement extérieure de la virole inférieure, soit deux segments de droite l'un étant incliné comme précédemment, et l'autre ayant une inclinaison supérieure.

Afin de permettre un meilleur ancrage de l'armature de carcasse, les faces planes en regard des deux viroles métalliques sont avantageusement munies de stries circonférentielles, stries de forme et de dimensions identiques aux stries connues et employées sur les jantes destinées aux pneumatiques hors la route de grandes dimensions, c'est-à-dire se présentant sous forme de dents de scie de profondeur compris entre 0,4 mm et 0,8 mm.

De même ces faces peuvent être pourvues d'orifices cylindriques de diamètre compris entre 2 mm et 6 mm. Dans le même but, l'armature de carcasse radiale du pneumatique, qui peut être composée d'une ou plusieurs nappes, sera avantageusement renforcée, dans sa partie enserrée entre les deux faces des viroles, par une ou plusieurs nappes de renforcement de câbles, par exemple de textile en polyamide et de préférence en polyamide aromatique, cette ou ces nappes pouvant entourer la tringle annexe de blocage. Les angles formées par les câbles de cette ou ces nappe(s) de renforcement avec la direction circonférentielle, sont préférentiellement compris entre 60° et 90°.

L'invention sera mieux décrite et mieux comprise à l'aide de la description de modes de réalisation non limitatifs et illustrés par le dessin annexé sur lequel :

- les fig. 1A et 1B représentent schématiquement en section méridienne deux variantes de fond de jante conforme à l'invention,
- les fig. 2A et 2B représentent schématiquement toujours en section méridienne deux variantes d'anneau latéral élastique amovible,
- les fig. 3A à 3D représentent respectivement un ensemble roulant composé d'une jante conforme à l'invention et un pneumatique comprenant des bourrelets,

  3A) à deux tringles avec retournement d'armature de carcasse enserrée entre celles-ci,

  3B) à deux tringles avec extrémité d'armature de carcasse enserrée entre celles-ci,

  3C) à deux viroles métalliques avec armature de carcasse et son retournement enserrés entre celles-ci,

  3D) à deux viroles métalliques avec armature de carcasse renforcée enserrée entre les deux viroles.

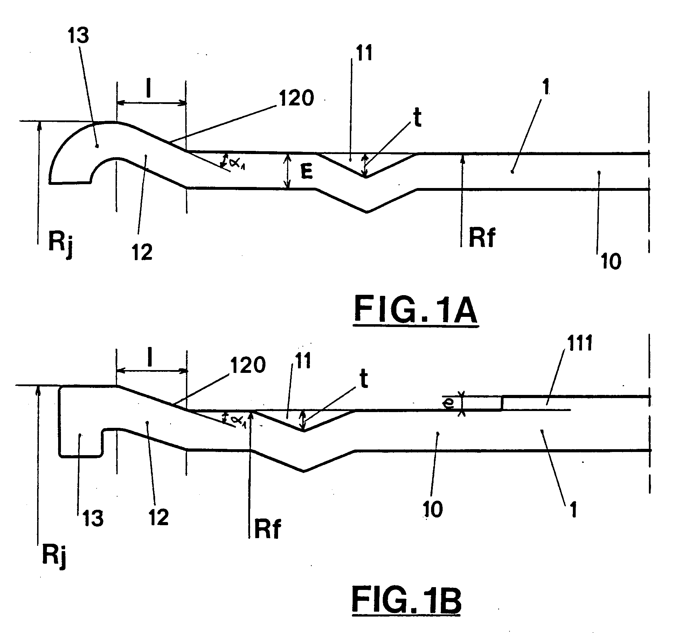

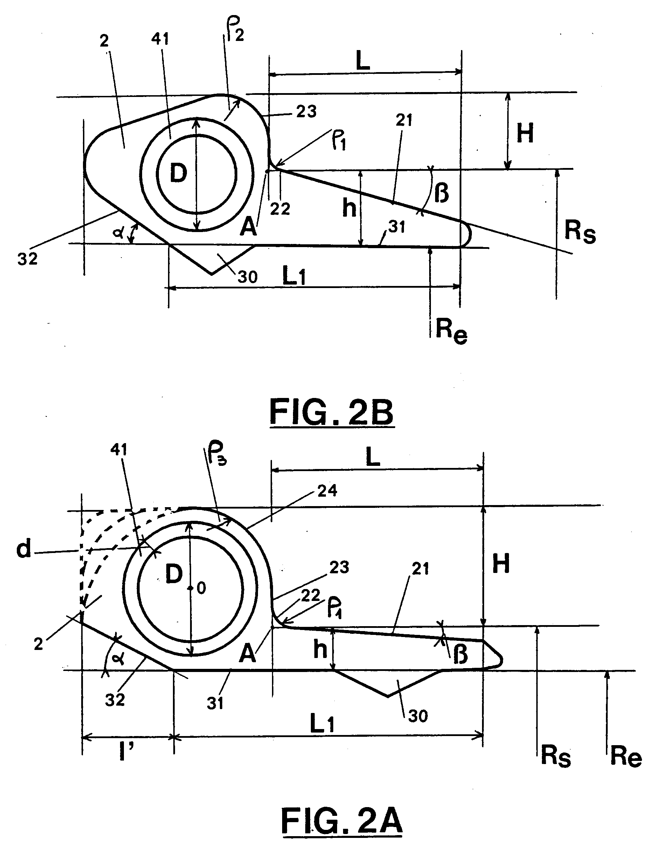

Les fonds de jantes des figures 1A et 1B et les anneaux latéraux amovibles des fig. 2A et 2B sont les éléments de jantes 20 x 7.5, pouvant remplacer les jantes dites 7.50V, 7.5, 7.5V ou 7 1/2 L par exemple.

La partie cylindrique (10) des fonds de jante (1), des fig. 1A et 1B, a un rayon $R_F$ égal à 254 mm. Elle comporte un évidement (11) de section méridienne triangulaire dont la hauteur (t) est égale à 5 mm, alors que l'épaisseur (E) du fond (10) est de 10 mm. Le fond, représenté sur la fig. 1B, est muni d'un renfort central (111), d'épaisseur (e) égale à 5 mm.

Axialement à l'extérieur, la partie cylindrique (10) est prolongée par un siège tronconique (12) la génératrice (120) de ce siège tronconique faisant avec l'axe de rotation de la jante un angle ($\alpha_1$) égal à 20°. La largeur axiale (1) de ce siège est dans le cas étudié de 20 mm, le rayon maximal ($R_J$) du fond de jante (1) étant alors de 261,3 mm.

Le siège tronconique (12) est prolongé axialement à l'extérieur par un crochet de jante (13) soit circulaire (fig. 1A), soit rectangulaire (fig. 1B).

L'anneau latéral amovible (2) de la fig. 2A est un anneau latéral à siège tronconique à 5°. La face radialement extérieure se compose du siège (21) de largeur axiale (L) égale à 30 mm, faisant avec l'axe de rotation de la jante un angle ($\beta$) égal à 5°. Ce siège (21) est prolongé axialement à l'extérieur par un arc de cercle (22) de rayon ($\rho_1$) égal à 8 mm, cet arc de cercle (22) étant tangent à un segment de droite (23) perpendiculaire à l'axe de rotation, segment de droite prolongé par un deuxième arc de cercle (24) de rayon ($\rho_3$) égal à 20,3 mm. La hauteur (H) du rebord, mesurée à partir du point d'intersection (A) entre le segment de droite (23) et le siège (21) est égale à 44,45 mm.

Le rayon ($R_s$) au point A est de 264 mm. La face radialement intérieure se compose d'une partie cylindrique (31), dont le rayon ($R_e$) est de 248 mm et qui se trouve située à une distance radiale (h) du point A égale à 16 mm. La largeur axiale ($L_1$) de cette partie cylindrique (31) est de 66,4 mm. Sur cette partie cylindrique (31) se trouve la saillie (30) d'épaisseur (t) égale à 5 mm et destinée à remplir l'évidement (11) du fond de jante (10). Axialement à l'extérieur et prolongeant la partie cylindrique (31), se trouve la partie tronconique (32) destinée à porter sur la partie correspondante (12) du fond de jante (10). Dans le cas étudié, la largeur axiale (1') de cette partie (32) est égale à la largeur (1) du siège (12) et l'angle ($\alpha$) que fait cette partie (32) avec l'axe de rotation de la jante est le même que l'angle ($\alpha_1$) entre la génératrice (120) du siège (12) du fond de jante (10) et ledit axe de rotation, égal à 20°.

L'anneau latéral amovible (2) est renforcé par un ressort hélicoïdal sans fin (41) ayant des spires jointives en acier laitonné et de diamètre (d) égal à 2 mm. Vu en section méridienne, le centre (O) de la spire est sensiblement à égale distance $(H+h)/2$, c'est-à-dire à 30,22 mm de la face cylindrique (31) de la paroi verticale (23) et du sommet du rebord (24) dudit anneau (2). Quant au diamètre (D) de la section transversale du ressort, il est égal à 58 mm. Afin d'une part d'éviter les décollages entre les spires du ressort (41) et le mélange vulcanisé de l'anneau latéral (2), et d'autre part d'augmenter la résistance à la déformation par compression transversale du ressort, celui-ci est avantageusement rempli intérieurement de mélange de caoutchouc vulcanisé de même composition que le vulcanisat de l'anneau latéral (2).

Quant à la jonction entre la face radialement extérieure et la face radialement intérieure, que ce soit radialement à l'intérieur ou axialement à l'extérieur, comme montré sur la la fig. 2A par les traits en pointillés, elle n'a aucun effet technique.

La fig. 2B représente une variante d'anneau latéral (2) où la face radialement extérieure se compose d'un siège (21) de largeur axiale (L) égale à 34 mm mais faisant avec l'angle de rotation un angle ($\beta$) égal à 15°. Ce siège (21) est prolongé par un arc de cercle (22) de rayon ($\rho_1$) égal à 8 mm, lui-même prolongé par un deuxième arc de cercle (23) tangent au premier et de rayon ($\rho_2$) égal à 12,7 mm.

Au niveau du point A, le rayon ($R_S$) est de 285,8 mm, et la face cylindrique intérieure (31) est radialement à une distance (h) égale à 30 mm. Le ressort hélicoïdal (41) est adapté évidemment à la hauteur (H), égale à 12,7 mm, à la hauteur (h) égale à 30 mm et à la profondeur de 5 mm de la saillie (30) de cet anneau latéral (2). Le diamètre (D) du ressort est alors de 38 mm, alors que l'anneau latéral (2) est monté sur un fond de jante ayant un rayon ($R_J$) égal à 275 mm, un rayon ($R_F$) égal à 267,7 mm, avec une partie tronconique telle que décrite précédemment pour les fonds de jante des figures 1A et 1B.

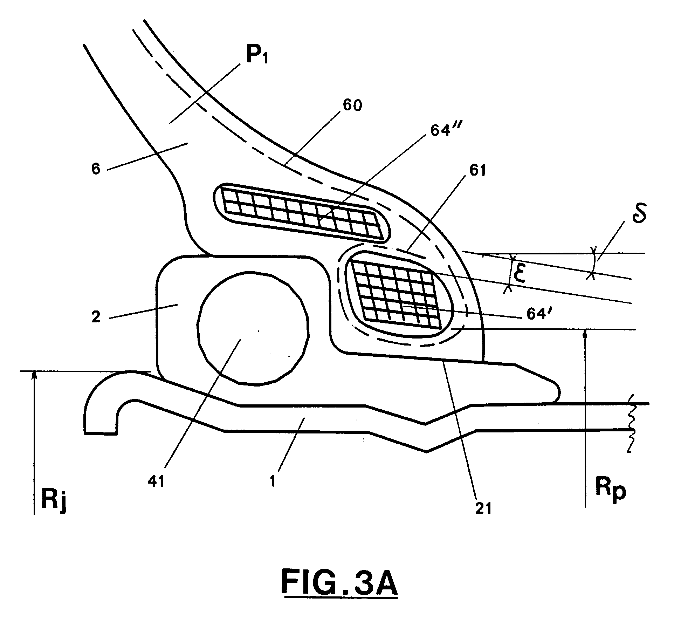

Sur la fig. 3A est représenté partiellement l'ensemble d'une jante, composée du fond de jante (1) et de deux anneaux latéraux (2) armés de ressorts (41), et d'un pneumatique ($P_1$) dont les bourrelets (6) sont dotés chacun de deux tringles (64') et (64''), entre lesquelles est enserrée le retournement (61) de l'armature de carcasse (60) après enroulement autour de la tringle radialement intérieure (64').

La première de ces tringles (64') est formée soit de fils rectangulaires en acier, soit d'un feuillard ou ruban d'acier enroulé, et prend appui sur le siège (21) de l'anneau latéral (2). La deuxième de ces tringles (64'') prend appui d'une part sur la première tringle (64') et d'autre part sur le sommet du rebord dudit anneau (2). Les formes et dimensions de ces tringles (64', 64'') sont adaptées aux contours sur lesquels elles prennent appui, et dans le cas montré sur la fig. 3A, les dimensions de la tringle (64') sont telles que la résistance de celle-ci soit très supérieure à la tension théorique due à la pression de gonflage. Dans le cas étudié, cette tringle (64') est formée de 8 x 8 = 64 fils en acier, de section rectangulaire dont la base mesure 2 mm et la hauteur 1,3 mm, alors que la tringle (64'') est formée de 18 x 2, soit 36 fils en acier de section rectangulaire identique à la section des fils de la tringle (64'). Les faces de ces tringles, en regard l'une de l'autre, sont parallèles entre elles sur une largeur axiale de 8 mm, inclinées par rapport à l'axe de rotation d'un angle ($\delta$) égal à 10°, et distantes l'une de l'autre d'une distance radiale ($\epsilon$) sensiblement égale à 3 mm.

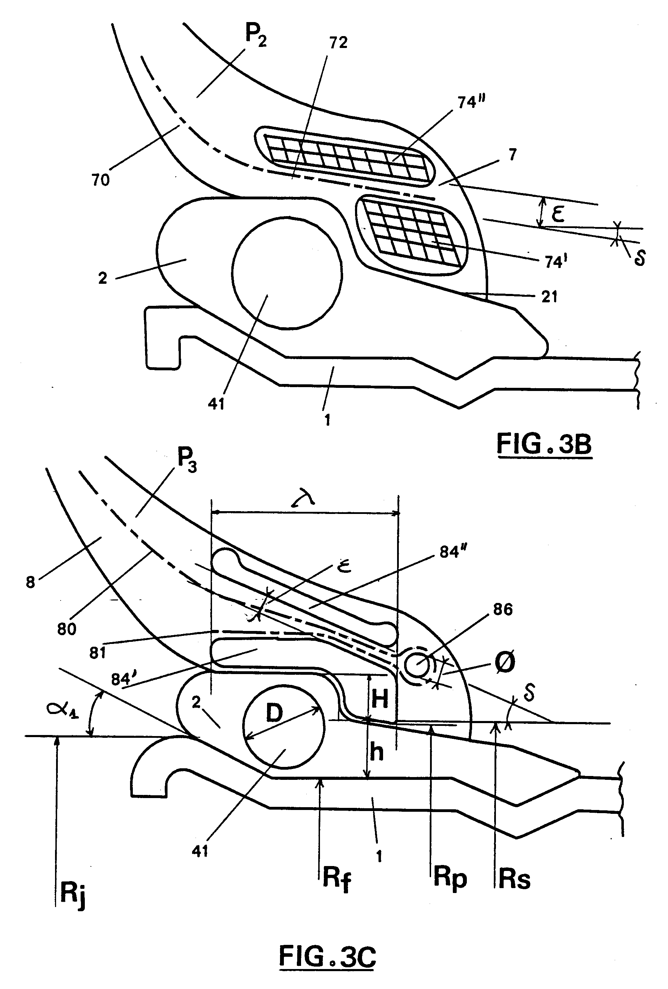

L'ensemble, montré sur la fig. 3B, fait appel à une jante formée d'un anneau latéral (2) et d'un fond de jante (1). Sur cette jante est monté un pneumatique ($P_2$) dont les bourrelets (7) sont chacun dotés de deux tringles (74') et (74'') de fils d'acier à section rectangulaire 2 x 1,3 mm.

L'armature de carcasse (70) a ses extrémités (72) enserrées entre les faces en regard des deux tringles respectivement, faces parallèles entre elles sur une largeur axiale de 16 mm et inclinées par rapport à l'axe de rotation de l'ensemble de l'angle ($\delta$) égal à 15°, la distance ($\epsilon$) restant égale à 3 mm.

Sur la variante montrée sur la fig. 3C, le pneumatique ($P_3$) est destiné à être utilisé aux lieu et place d'un pneumatique 1400R20 X, c'est-à-dire un pneumatique ayant le même diamètre hors tout et la même largeur axiale maximale. Le pneumatique ($P_3$) conforme à l'invention est monté sur une jante composée d'un fond de jante (1), dont le rayon ($R_J$) est égal à 313 mm et le rayon ($R_F$) à 305 mm, valeur à comparer à 254 mm valeur correspondante au rayon nominal de la jante sur laquelle est monté le pneumatique 1400 R 20 X usuel, et de deux anneaux latéraux (2) semblables à l'anneau représenté sur la fig. 2A dont le rayon ($R_e$) est égal à 297 mm et le rayon ($R_S$) à 316,6 mm, alors que le diamètre (D) de l'élément annulaire de renforcement (41) est égal à 29 mm. Les grandeurs (H) et (h) sont respectivement égales à 14 mm et 19,6 mm, et les angles ($\alpha_1$) et ($\alpha$) sont égaux entre eux et a 20°, alors que la largeur axiale (L) du siège de l'anneau (2) est de 30 mm.

Le pneumatique ($P_3$) possède des bourrelets (8) renforcés chacun par deux viroles métalliques laitonnées (84') et (84''). La virole inférieure (84') a une largeur axiale totale ($\lambda$) de 54 mm et sa face radialement extérieure se compose d'une partie inclinée d'un angle ($\delta$) égal à 18° sur une largeur axiale égale à 28 mm, et d'une partie parallèle à l'axe de rotation de l'ensemble. La virole supérieure (84''), s'étendant sur la même largeur axiale totale de 54 mm, a une face radialement intérieure rectiligne, inclinée par rapport à l'axe de rotation du même angle ($\delta$) égal à 18° et située à la distance ($\epsilon$) de la face inclinée en regard de la virole inférieure (84'), sur la largeur axiale de 28 mm. Dans ce cas, la distance ($\epsilon$) correspond à deux fois l'épaisseur de l'armature de carcasse (80) puisque celle-ci et son retournement (81) sont enserrées entre les deux faces en regard des deux viroles métalliques (84') et (84''), sur la largeur axiale de 28 mm où ces deux faces sont parallèles entre elles. L'armature de carcasse (80) peut être simplement repliée sur elle-même pour former le retournement (81). De préférence, l'armature de carcasse est retournée autour d'une tringle auxiliaire (86), située axialement à l'intérieur des extrémités intérieures des viroles (84') et (84''), tringle auxiliaire de section transversale circulaire dont le diamètre (ø) est légèrement supérieur à la distance ($\epsilon$). Dans le cas étudié, l'armature de carcasse comprend une unique nappe de câbles métalliques d'épaisseur 1,2 mm ; la distance ($\epsilon$) est égale à 2,4 mm et le diamètre (ø) de la tringle auxiliaire est égal à 3 mm.

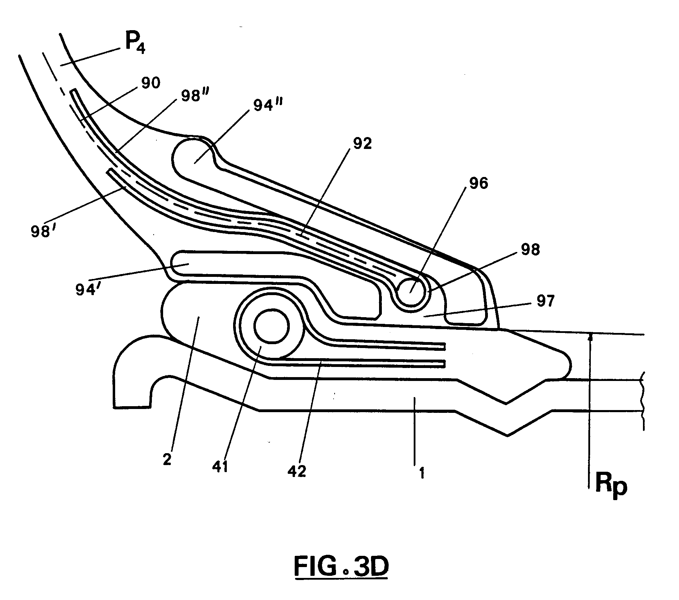

La fig. 3D représente une variante de la fig. 3C. Les différences portent sur l'anneau latéral (2), sur la forme de la virole supérieure, et sur l'ancrage de l'armature de carcasse. L'anneau latéral (2) de la fig. 3D est non seulement renforcé par un élément annulaire (41), mais en outre par une nappe de renforcement (42) de câbles radiaux résistants à la compression, câbles en acier ou en polyamide aromatique. Cette nappe (42) est enroulée autour de l'élément annulaire (41) pour former deux couches dans le siège de l'anneau latéral (2). Si la virole inférieure (94') reste identique à la virole (84') de la fig. 3C, la virole supérieure (94'') est axialement prolongée vers l'intérieur, tout en se courbant, afin de prendre contact avec l'anneau latéral (2), et crée une cavité où s'insèrent d'une part la tringle auxiliaire (96) et d'autre part une point de gomme (97).

Quant à l'extrémité (92) de l'armature de carcasse (90), elle est renforcée par les deux couches (98') et (98'') formées par l'enroulement d'une nappe (98) de renfort en monofils de polyamide aromatique de diamètre égal à 0,7 mm autour de la tringle auxiliaire (96), identique à la tringle (86) de la fig. 3C. Ces câbles peuvent être inclinés par rapport à la direction circonférentielle d'un angle compris entre 60° et 90°, mais sont préférentiellement inclinés d'un angle égal à 90°.

Dans le cas des fig. 3C et 3D, c'est-à-dire en présence des viroles métalliques, celles-ci peuvent être pourvues de stries (non représentées) sur les deux faces parallèles et inclinées en regard. Ces stries se présentent sous la forme de dents de scie, de profondeur égale à 0,8 mm, les arêtes de ces stries étant orientées circonférentiellement.

Ces stries permettent un meilleur ancrage des extrémités d'armature de carcasse. Il en est de même des perforations ou orifices dont on peut avantageusement munir la virole supérieure, ce qui permet un ancrage excellent par remplisage des orifices par du caoutchouc.

Il va de soi que les exemples de réalisation décrits ne sont nullement limitatifs et que l'on peut, sans sortir du cadre de la présente invention apporter diverses modifications notamment par la substitution de moyens équivalents.

**Revendications**

1. Jante composée d'un fond de jante métallique (1) et de deux anneaux latéraux amovibles (2) formés chacun d'un siège (21) et d'un rebord (23, 24) caractérisée en ce que

   - chaque anneau latéral (2), vu en section méridienne, a une face radialement extérieure formée d'une génératrice tronconique (21) de largeur axiale (L), de rayon maximum ($R_S$) par rapport à l'axe de rotation de la jante, faisant avec ledit axe un angle ($\beta$) compris entre O° et 15°, et étant réunie à un rebord (23, 24) de hauteur (H) par l'intermédiaire d'un arc de cercle (22) de rayon ($\rho_1$), et une face radialement intérieure formée d'une partie cylindrique (31) de rayon ($R_e$), de largeur axiale ($L_1$), comprise entre L + (H + h)/2 et L + (H + h), h étant l'épaisseur du siège tronconique de l'anneau (2), égale à ($R_S$ - $R_e$), et axialement à l'extérieur d'une partie tronconique dont la génératrice (32) fait avec l'axe de rotation un angle ($\alpha$) compris entre 10 et 35°

   - chaque anneau latéral (2) étant composé d'un vulcanisat renforcé, entre le rebord (23, 24) et la face intérieure (31, 32), par un élément de renforcement annulaire (41) dont le développement circonférentiel peut s'allonger d'au moins 3 % et possédant une section transversale dont la dimension radiale maximale (D) est comprise entre les quantités (H + h) et (H), la déformation de la section sous effort de compression étant inférieure à 2 %,

   - et en ce que le fond de jante (1) présente une partie cylindrique (10) de rayon ($R_F$) égal à $kR_e$, k étant compris entre 1,02 et 1,05, cette partie cylindrique (10) étant prolongée axialement à l'extérieur par des parties tronconiques (12) dont les génératrices (120) font avec l'axe de rotation de la jante des angles ($\alpha_1$) compris dans l'intervalle $\alpha$ ± 2°, les rayons maximaux ($R_J$) de ces parties tronconiques (12) étant tels que la quantité [$R_F$ + (H + h)] - $R_J$ soit inférieure à la dimension (D).

2. Jante selon la revendication 1, caractérisée en ce que la section transversale de l'élément de renforcement annulaire (41) possède au moins des faces parallèles d'une part au contour du rebord (23, 24) de la face radialement extérieure de l'anneau latéral (2), d'autre part à sa face radialement intérieure au niveau de la jonction entre la partie cylindrique (31) et la génératrice (32) de la partie tronconique axialement extérieure.

3. Jante selon la revendication 1, caractérisée en ce que la section transversale de l'élément de renforcement annulaire (41) est circulaire.

4. Jante selon l'une des revendications 1 à 3, caractérisée en ce que l'élément annulaire de renforcement (41) est un ressort annulaire hélicoïdal à spires métalliques jointives, la section transversale de la spire étant circulaire et de diamètre (d) compris entre 2 et 4 mm.

5. Jante selon la revendication 4, caractérisée en ce qu'est inséré à l'intérieur du ressort hélicoïdal (41) un anneau en vulcanisat de très grande dureté ou un anneau en matière plastique, anneaux circulairement discontinus.

6. Jante selon l'une des revendications 1 à 5, caractérisée en ce que la partie cylindrique (31) de la face radialement intérieure de chaque anneau latéral (2) est munie d'une saillie (30) de forme triangulaire, saillie (30) correspondant à un évidement (11) sur la partie cylindrique (10) du fond de jante (1).

7. Jante selon l'une des revendications 1 à 6, caractérisée en ce que chaque anneau latéral amovible (2) a une face radialement extérieure (21, 22, 23, 24) dont les côtes obéissent aux normes en vigueur (TRA ou ETRTO).

8. Jante selon l'une des revendications 1 à 7, caractérisée en ce que le vulcanisat constituant l'anneau latéral (2) présente un module sécant d'élasticité, à 10 % d'allongement relatif, au moins égal à 5,5 MPa.

9. Jante selon l'une des revendications 1 à 8, caractérisée en ce que l'anneau latéral (2) est renforcé par une armature de renforcement (42) de câbles radiaux, armature qui est retournée autour de l'élément annulaire de renforcement (41) pour former dans le siège dudit anneau (2) des couches distinctes.

10. Ensemble d'une jante et d'un pneumatique de type "Poids Lourd" dont le rapport de forme H/B est inférieure à 0,80, caractérisé en ce qu'il est composé d'une part d'une jante selon l'une des revendications 1 à 8 et d'un pneumatique ($P_1$, $P_2$, $P_3$, $P_4$) dont les extrémités (72, 92) d'armature de carcasse (70, 90) ou dont l'armature de carcasse (60, 80) et/ou son retournement (61, 81) sont enserrés entre les deux faces respectivement d'éléments annulaires (64', 64'' ; 74', 74'' ; 84', 84'' ; 94', 94'') inextensibles circonférentiellement et parties intégrantes du pneumatique, lesdites faces étant planes et parallèles entre elles sur une distance axiale au moins égale à 15 mm, et inclinées par rapport à l'axe de rotation d'un angle ouvert vers l'extérieur du pneumatique, compris entre 5° et 30°, un des éléments (64'', 74'', 84', 94'), recouvrant radialement le rebord de jante et une partie de son siège, le rayon minimum ($R_p$) des éléments annulaires (64', 74', 84', 94'') étant au moins égal au rayon maximal ($R_J$) du fond de jante (1) de la jante sur laquelle est monté le pneumatique.

11. Ensemble selon la revendication 10, caractérisé en ce que les éléments (64', 64'' ; 74', 74'' ; 84', 84'', 94', 94'') sont métalliques.

12. Ensemble roulant selon la revendication 11, caractérisé en ce que les éléments métalliques (64', 64'' ; 74', 74'') sont des tringles métalliques en acier formés de fils à section rectangulaire.

13. Ensemble roulant selon la revendication 11, caractérisé en ce que les éléments métalliques (64', 64'' ; 74', 74'') sont des tringles formées par un feuillard ou ruban en acier enroulé.

14. Ensemble roulant selon la revendication 11, caractérisé en ce que les éléments métalliques (84', 84'' ; 94', 94'') sont des viroles métalliques en acier laitonné.

15. Ensemble roulant selon l'une des revendications 12 ou 13, caractérisé en ce que l'armature de carcasse (60) du pneumatique ($P_1$) a son retournement (61) enserrée entre les faces de deux tringles (64', 64'').

16. Ensemble roulant selon l'une des revendications 12 ou 13, caractérisé en ce que l'armature de carcasse (70) du pneumatique ($P_2$) a son extrémité (72) enserrée entre les faces de deux tringles (74', 74'').

17. Ensemble roulant selon la revendication 11, caractérisé en ce que l'armature de carcasse (80) du pneumatique (P₃) et son retournement (81), obtenu par enroulement autour d'une tringle auxiliaire (86), sont enserrées entre les faces de deux viroles métalliques en acier laitonné, la face radialement intérieure de la virole inférieure ayant un profil méridien identique au profil méridien de la face radialement extérieure de l'anneau latéral (2) sur lequel repose la virole (84') inférieure.

18. Ensemble selon la revendication 11, caractérisé en ce que l'extrémité (92) de l'armature de carcasse (90) du pneumatique (P₄), renforcée radialement de part et d'autre par les deux couches (98') et (98'') formées par enroulement d'une armature de renforcement (98) de fils ou câbles autour d'une tringle auxiliaire (96), est enserrée entre les deux faces respectivement de deux viroles métalliques en acier laitonné, la face radialement intérieure de la virole inférieure ayant un profil méridien identique au profil méridien de la face radialement extérieur de l'anneau latéral (2) sur lequel repose la virole (94') inférieure.

19. Ensemble selon la revendication 18, caractérisé en ce que l'armature de renforcement (98) est formée de fils ou câbles en polyamide aromatique, inclinés d'un angle compris entre 60° et 90° par rapport à la direction circonférentielle.

20. Ensemble selon l'une des revendications 17 à 19, caractérisé en ce que la virole supérieure (94'') a une face radialement intérieure qui se prolonge axialement et radialement à l'intérieur de façon à prendre contact avec l'anneau latéral (2) en même temps que la virole inférieure (94').

**Claims**

1. A rim formed of a metal rim base (1) and of two removable side rings (2), each formed of a seat (21) and a flange (23, 24), characterised in that

   - each side ring (2), seen in meridian section, has a radially outer face formed of a frustoconical generatrix (21) of axial width (L), of maximum radius ($R_S$) with respect to the axis of rotation of the rim, forming with said axis an angle ($\beta$) of between 0° and 15°, and being connected to a flange (23, 24) of height (H) by a circular arc (22) of radius ($\rho_1$) and a radially inner face formed of a cylindrical part (31) of radius ($R_e$), of axial width ($L_1$), of between L + (H + h)/2 and L + (H + h), h being the thickness of the frustoconical seat of the ring (2), equal to ($R_S$-$R_e$) and, axially to the outside of a frustoconical part the generatrix (32) of which forms an angle ($\alpha$) of between 10° and 35° with the axis of rotation;

   - each side ring (2) being formed of a vulcanised material reinforced between the flange (23, 24) and the inner face (31, 32) by an annular reinforcement element (41), the circumferential development of which may be lengthened by at least 3% and having a cross-section the maximum radial dimension (D) of which is between the amounts (H + h) and (H), the deformation of the section under compression stress being less than 2%,

   - and in that the rim base (1) has a cylindrical part (10) of radius ($R_F$) equal to k$R_e$, k being between 1.02 and 1.05, this cylindrical part (10) being extended axially to the outside by frustoconical parts (12), the generatrices (120) of which form angles ($\alpha_1$) within the range of $\alpha \pm 2°$ with the axis of rotation of the rim, the maximum radii ($R_J$) of these frustoconical parts (12) being such that the quantity [$R_F$ + (H + h)] - $R_J$ is less than the dimension (D).

2. A rim according to Claim 1, characterised in that the cross-section of the annular reinforcement element (41) has at least faces parallel, on the one hand, to the contour of the flange (23, 24) of the radially outer face of the side ring (2) and, on the other hand, to its radially inner face at the level of the junction between the cylindrical part (31) and the generatrix (32) of the axially outer frustoconical part.

3. A rim according to Claim 1, characterised in that the cross-section of the annular reinforcement element (41) is circular.

4. A rim according to one of Claims 1 to 3, characterised in that the annular reinforcement element (41) is an annular coil spring with adjoining metal turns, the cross-section of the turn being circular and the diameter (d) being between 2 and 4 mm.

5. A rim according to Claim 4, characterised in that within the coil spring (41) there is inserted a ring of vulcanised material of very great hardness or a ring of plastic material, which rings are circularly discontinuous.

**6.** A rim according to one of Claims 1 to 5, characterised in that the cylindrical part (31) of the radially inner face of each side ring (2) is provided with a protrusion (30) of triangular shape, which protrusion (30) corresponds to a recess (11) on the cylindrical part (10) of the rim base (1).

**7.** A rim according to one of Claims 1 to 6, characterised in that each removable side ring (2) has a radially outer face (21, 22, 23, 24) the size of which satisfies existing standards (TRA or ETRTO).

**8.** A rim according to one of Claims 1 to 7, characterised in that the vulcanised material constituting the side ring (2) has a secant modulus of elasticity with 10% relative elongation which is equal to at least 5.5 MPA.

**9.** A rim according to one of Claims 1 to 8, characterised in that the side ring (2) is reinforced by a reinforcement armature (42) of radial cables, which armature is turned up around the annular reinforcement element (41) to form distinct layers in the seat of said ring (2).

**10.** An assembly formed of a rim and a tyre of "heavy goods vehicle" type, the form ratio H/B of which is less than 0.80, characterised in that it is formed, on the one hand, of a rim according to one of Claims 1 to 8 and of a tyre ($P_1$, $P_2$, $P_3$, $P_4$), the ends (72, 92) of the carcass reinforcement (70, 90) of which or the carcass reinforcement (60, 80) of which and/or the turn-up (61, 81) of which are clamped between the two faces, respectively, of circumferentially inextensible annular elements (64', 64''; 74', 74''; 84', 84''; 94', 94'') which are integral parts of the tyre, said faces being flat and parallel to each other over an axial distance at least equal to 15 mm and inclined with respect to the axis of rotation by an angle, open towards the outside of the tyre, of between 5° and 30°, one of the elements (64'', 74'', 84', 94') radially covering the rim flange and a part of its seat, the minimum radius ($R_p$) of the annular elements (64', 74', 84', 94'') being at least equal to the maximum radius ($R_J$) of the rim base (1) of the rim on which the tyre is mounted.

**11.** An assembly according to Claim 10, characterised in that the elements (64', 64''; 74', 74''; 84', 84''; 94', 94'') are metallic.

**12.** A rolling assembly according to Claim 11, characterised in that the metal elements (64', 64''; 74', 74'') are metal bead wires of steel formed by wires of rectangular section.

**13.** A rolling assembly according to Claim 11, characterised in that the metal elements (64', 64''; 74', 74'') are bead wires formed of a rolled strip or ribbon of steel.

**14.** A rolling assembly according to Claim 11, characterised in that the metal elements (84', 84''; 94', 94'') are metal ferrules of brass-coated steel.

**15.** A rolling assembly according to one of Claims 12 or 13, characterised in that the carcass reinforcement (60) of the tyre ($P_1$) has its turn-up (61) clamped between the faces of two bead wires (64', 64'').

**16.** A rolling assembly according to one of Claims 12 or 13, characterised in that the carcass reinforcement (70) of the tyre ($P_2$) has its end (72) clamped between the faces of two bead wires (74', 74'').

**17.** A rolling assembly according to Claim 11, characterised in that the carcass reinforcement (80) of the tyre ($P_3$) and its turn-up (81), obtained by winding around an auxiliary bead wire (86), are clamped between the faces of two metal ferrules of brass-plated steel, the radially inner face of the lower ferrule having an identical meridian profile to the meridian profile of the radially outer face of the side ring (2) on which the lower ferrule (84') rests.

**18.** An assembly according to Claim 11, characterised in that the end (92) of the carcass reinforcement (90) of the tyre ($P_4$), which reinforcement is reinforced radially on both sides by the two layers (98') and (98'') formed by winding a reinforcement armature (98) of wires or cables around an auxiliary bead wire (96), is clamped between the two faces, respectively, of two metal ferrules of brass-plated steel, the radially inner face of the lower ferrule having a meridian profile identical to the meridian profile of the radially outer face of the side ring (2) on which the lower ferrule (94') rests.

**19.** An assembly according to Claim 18, characterised in that the reinforcement armature (98) is formed of wires or cables of aromatic polyamide inclined by an angle of between 60° and 90° with respect to the circumferential direction.

**20.** An assembly according to one of Claims 17 to 19, characterised in that the upper ferrule (94'') has a radially inner face which is extended axially and radially towards the inside so as to make contact with the side ring (2) at the same time as the lower ferrule (94').

**Patentansprüche**

1. Felge, bestehend aus einem metallischen Felgenbett (1) und zwei abnehmbaren Seitenringen (2), die jeweils aus einem Sitz (21) und einer Kante (23, 24) gebildet sind, **dadurch gekennzeichnet, daß**

   - jeder Seitenring (2) im axialen Schnitt gesehen eine radial äußere Seite, die durch eine Kegelerzeugende (21) mit axialer Breite (L) und maximalem Radius ($R_S$) bezogen auf die Drehachse der Felge gebildet ist, die mit dieser Achse einen Winkel ($\beta$) von zwischen 0° und 15° bildet und mit einer Kante (23, 24) der Höhe (H) über einen Kreisbogen (22) mit Radius ($\rho_1$) verbunden ist, und eine radial innere Seite aufweist, die durch einen zylindrischen Bereich (31) mit Radius ($R_e$) mit einer axialen Breite ($L_1$) von zwischen L + (H + h)/2 und L + (H + h), wobei die Dicke h des kegelförmigen Sitzes des Rings (2) gleich ($R_S$ - $R_e$) ist, und axial nach außen durch einen kegelförmigen Bereich gebildet ist, dessen Erzeugende (32) mit der Drehachse einen Winkel ($\alpha$) von zwischen 10 und 35° bildet,
   - jeder Seitenring (2) aus einem Vulkanisat gebildet ist, das zwischen der Kante (23, 24) und der inneren Seite (31, 32) durch ein ringförmiges Verstärkungselement (41) verstärkt ist, dessen Umfangsausdehnung um mindestens 3 % gestreckt werden kann und das einen Querschnitt besitzt, dessen maximale radiale Ausdehnung (D) zwischen den Werten (H + h) und (H) liegt, wobei die Verformung des Querschnitts unter Druckbelastung kleiner als 2 % ist,
   - und daß das Bett der Felge (1) einen zylindrischen Bereich (10) ausweist, dessen Radius ($R_F$) gleich $kR_e$ ist, wobei k zwischen 1,02 und 1,05 liegt und der zylindrische Bereich (10) axial nach außen durch kegelförmige Bereiche (12) verlängert ist, deren Erzeugende (120) mit der Drehachse der Felge Winkel ($\alpha_1$) im Intervall $\alpha \pm 2°$ bilden, wobei die maximalen Radien ($R_J$) dieser kegelförmigen Bereiche (12) so sind, daß der Wert [$R_F$ + (H + h)] - $R_J$ kleiner als die Ausdehnung (D) ist.

2. Felge nach Anspruch 1, dadurch gekennzeichnet, daß der Querschnitt des ringförmigen Verstärkungselements (41) wenigstens einerseits zur Kontur der Kante (23, 24) der radial äußeren Seite des Seitenrings (2) und andererseits zu dessen radial innerer Seite in Höhe der Verbindung zwischen dem zylindrischen Bereich (21) und der Erzeugenden (32) des axial äußeren kegelförmigen Bereichs parallele Seiten besitzt.

3. Felge nach Anspruch 1, dadurch gekennzeichnet, daß der Querschnitt des ringförmigen Verstärkungselements (41) kreisförmig ist.

4. Felge nach einem der Ansprüche 1 bis 3, dadurch gekennzeichnet, daß das ringförmige Verstärkungselement (41) eine ringförmige Schraubenfeder mit aneinanderstoßenden Metallwindungen ist, wobei der Querschnitt der Windung kreisförmig ist und einen Durchmesser von zwischen 2 und 4 mm hat.

5. Felge nach Anspruch 4, dadurch gekennzeichnet, daß ins Innere der Schraubenfeder (41) ein Ring aus Vulkanisat großer Härte oder ein Ring aus Kunststoffmaterial eingefügt ist, wobei diese Ringe in Kreisrichtung diskontinuierlich sind.

6. Felge nach einem der Ansprüche 1 bis 5, dadurch gekennzeichnet, daß der zylindrische Bereich (31) der radial inneren Seite eines jeden Seitenrings (2) mit einem dreieckförmigen Vorsprung (30) versehen ist, der einer Ausnehmung (11) am zylindrischen Bereich (10) des Felgenbetts (1) entspricht.

7. Felge nach einem der Ansprüche 1 bis 6, dadurch gekennzeichnet, daß jeder abnehmbare Seitenring (2) eine radial äußere Seite (21, 22, 23, 24) hat, deren Bemessungen den geltenden Normen (TRA oder ETRTO) entsprechen.

8. Felge nach einem der Ansprüche 1 bis 7, dadurch gekennzeichnet, daß das den Seitenring (2) bildende Vulkanisat einen Scherelastizitätsmodul bei 10 % relativer Dehnung von wenigstens gleich 5,5 MPa hat.

9. Felge nach einem der Ansprüche 1 bis 8, dadurch gekennzeichnet, daß der Seitenring (2) durch eine Verstärkung (42) aus radialen Seilen verstärkt ist, die um das ringförmige Verstärkungselement (41) zurückgeführt ist, um im Sitz des Rings (2) getrennte Schichten zu bilden.

10. Einheit aus einer Felge und einem Luftreifen für Schwerfahrzeuge, bei dem das Höhen/Breiten-Verhältnis kleiner als 0,80 ist, **dadurch gekennzeichnet, daß** er einerseits aus einer Felge nach einem der Ansprüche 1 bis 8 und einem Luftreifen ($P_1$, $P_2$, $P_3$, $P_4$) besteht, bei dem die Enden (71, 92) der Karkassenbewehrung (70, 90) oder die Karkassenbewehrung (60, 80) und/oder ihre Rückführung (61, 81) jeweils zwischen zwei Seiten von ringförmigen Elementen (64', 64''; 74', 74''; 84', 84''; 94', 94'') eingeklemmt sind, welche in Umfangsrichtung nicht dehnbar sind und Bestandteile des Luftreifens bilden, wobei die Seiten über einen axialen Abstand von mindestens 15 mm eben und zueinander parallel und gegen die Drehachse unter einem zum Äußeren des Reifens hin offenen Winkel von zwischen 5° und 30° geneigt sind, wobei eines der Elemente (64'', 74'', 84', 94') radial die Kante der Felge und einen Teil ihres Sitzes überdeckt, wobei der minimale Radius ($R_p$) der ringförmigen Elemente (64', 74', 84', 94'') wenigstens gleich dem maximalen Radius ($R_J$) des Felgenbodens (1) der Felge ist, an der der Luftreifen montiert ist.

11. Einheit nach Anspruch 10, dadurch gekennzeichnet, daß die Elemente (64', 64''; 74', 74''; 84', 84''; 94', 94'') aus Metall sind.

12. Einheit nach Anspruch 11, dadurch gekennzeichnet, daß die Metallelemente (64', 64''; 74', 74'') aus Drähten mit rechteckigem Querschnitt gebildete stählerne Wulstkerne sind.

13. Einheit nach Anspruch 11, dadurch gekennzeichnet, daß die Metallelemente (64', 64''; 74', 74'') aus einem aufgewickelten Stahlband gebildete Wulstkerne sind.

14. Einheit nach Anspruch 11, dadurch gekennzeichnet, daß die Metallelemente (84', 84''; 94', 94'') metallische Reife aus vermessingtem Stahl sind.

15. Einheit nach einem der Ansprüche 12 oder 13, dadurch gekennzeichnet, daß die Rückführung (61) der Karkassenbewehrung (60) des Luftreifens ($P_1$) zwischen den Seiten zweier Wulstkerne (64', 64'') eingeklemmt ist.

16. Einheit nach einem der Ansprüche 12 oder 13, dadurch gekennzeichnet, daß das Ende (72) der Karkassenbewehrung (70) des Luftreifens ($P_2$) zwischen den Seiten zweier Wulstkerne (74', 74'') eingeklemmt ist.

17. Einheit nach Anspruch 11, dadurch gekennzeichnet, daß die Karkassenbewehrung (80) des Luftreifens ($P_3$) und ihre durch Aufwickeln um einen Hilfswulstkern (86) erhaltene Rückführung (81) zwischen den Seiten zweier Metallreife aus vermessingtem Stahl eingeklemmt sind, wobei die radial innere Seite des unteren Reifs im axialen Schnitt ein Profil gleich dem der radial äußeren Seite des Seitenrings (2) hat, auf dem der untere Reif (84') ruht.

18. Einheit nach Anspruch 11, dadurch gekennzeichnet, daß das Ende (92) der Karkassenbewehrung (90) des Luftreifens ($P_4$), die beiderseits durch zwei Lagen (98') und (98'') verstärkt ist, die durch Aufwickeln einer Verstärkungsbewehrung (98) aus Fäden oder Seilen um einen Hilfswulstkern (96) gebildet ist, zwischen zwei Flächen von jeweils zwei Metallreifen aus vermessingtem Stahl eingeklemmt ist, wobei die radial innere Seite des unteren Reifs im axialen Schnitt ein Profil gleich der radial äußeren Seite des Seitenrings (2) hat, auf dem der untere Reif (94') ruht.

19. Einheit nach Anspruch 18, dadurch gekennzeichnet, daß die Verstärkungsbewehrung (98) aus Fäden oder Seilen aus aromatischem Polyamid gebildet ist, die um einen Winkel von zwischen 60° und 90° gegen die Umfangsrichtung geneigt sind.

20. Einheit nach einem der Ansprüche 17 bis 19, dadurch gekennzeichnet, daß der obere Reif (94'') eine radial innere Seite hat, die axial und radial so nach innen verlängert ist, daß sie zusammen mit dem unteren Reif (94') den Seitenring (2) berührt.

## FIG.1A

## FIG.1B

13

**FIG. 2B**

**FIG. 2A**

**FIG.3A**

FIG.3B

FIG.3C

**FIG.3D**